**Europäisches Patentamt**

(19) **European Patent Office**

**Office européen des brevets**

(11) Veröffentlichungsnummer: **0 022 738**
**B1**

(12) **EUROPÄISCHE PATENTSCHRIFT**

(45) Veröffentlichungstag der Patentschrift:
16.06.82

(51) Int. Cl.³: **B 28 C 5/00, C 04 B 13/00**

(21) Anmeldenummer: **80630017.4**

(22) Anmeldetag: **17.06.80**

(54) **Verfahren zum Herstellen von Kolloidmörtel und gemäss diesem Verfahren gewonnenes Produkt.**

(30) Priorität: **17.07.79 LU 81524**

(43) Veröffentlichungstag der Anmeldung:
**21.01.81 Patentblatt 81/3**

(45) Bekanntmachung des Hinweises auf die Patenterteilung:
**16.06.82 Patentblatt 82/24**

(84) Benannte Vertragsstaaten:
**AT BE CH DE FR GB IT LI NL SE**

(56) Entgegenhaltungen:
**EP-A-0 003 704**
**BE-A-556 314**
**FR-A-944 700**
**US-A-2 316 705**
**US-A-2 827 386**
**US-A-3 395 897**

(73) Patentinhaber: **ARBED S.A., Avenue de la Liberté 19, L-2930 Luxembourg (LU)**

(72) Erfinder: **Artois, Fernand, 25 rue J.P. Federspiel, L-Strassen (LU)**
Erfinder: **Linden, Raymond, 26 rue Pasteur, L-Differdange (LU)**
Erfinder: **Feitler, Albert, 27A rue de Mamer, L-Kopstal (LU)**

(74) Vertreter: **Neyen, René, Administration Centrale de l'Arbed Case postale 1802, L-2930 Luxembourg (LU)**

Verfahren zum Herstellen von Kolloidmörtel und gemäss diesem Verfahren gewonnenes Produkt

Die vorliegende Erfindung betrifft ein Verfahren zum Herstellen von Kolloidmörtel, insbesondere zum Beschichten von Formteilen aus Stahl, wie Leitungsrohren, Kesseln u.dgl., sowie das gemäss diesem Verfahren gewonnene Produkt.

Es ist bekannt, dass die für viele Anwendungszwecke geeigneten hochkolloidalen Zement-Wasser-Gemische auch dazu dienen können, die teuren zum Schutz gegen Korrosion verwendeten Anstriche, Farben, Lacke oder Kunststoffüberzüge, bspw. auf der Basis organischer Polymerer, preisgünstig zu ersetzen. Hierbei besteht einer der Hauptvorteile dieser Gemische darin, dass die zu beschichtenden Formteile aus Stahl keiner Oberflächenvorbehandlung, z.B. durch Sandstrahlen, bedürfen, die einen hohen Faktor bei der Berechnung der Gestehungskosten für den konventionellen Korrosionsschutz darstellt.

Ein hochkolloidales Zement-Wasser-Gemisch kann bspw. nach dem in der deutschen Patentanmeldung DE-A-27 18 236.1 beschriebenen Verfahren hergestellt werden, das vorsieht, in einem Mischer Zement und Wasser in einem Verhältnis von 0,25–0,6 während eines Zeitraumes von etwa 2 Minuten mit einer Geschwindigkeit von etwa 300 m/Minute mittels eines Rührers vorzumischen und dann mindestens 8 Minuten lang einer Massenbeschleunigung von mindestens 2 g (g = 9,81 m/sec$^2$) auszusetzen.

Auf diese Weise kann man Beschichtungsgemische herstellen, die unter anderen Eigenschaften eine hohe Adhäsionsfähigkeit an nicht vorbehandelten Stahloberflächen aufweisen. Beim Beschichten können dem Gemisch zur Erhöhung der Schichtkohäsion feingehäckselte anorganische oder organische Fasern zugesetzt werden. Die auf solcherart behandelten Produkten gemessenen mittleren Druck- und Biegezugfestigkeiten betragen 850 bzw. 250 kp/cm$^2$ (Schichtdicke 6 mm, Aushärtungszeit 28 Tage).

Es ist auch bekannt, herkömmliche Zement-Sand-Wasser-Gemische mit Glasfaserzusätzen für die Aussenbeschichtung von Rohren zu verwenden. Allerdings ist es nicht möglich, diese Gemische ohne die Zuhilfenahme von Bandagen auf abgerundeten Bauteilen wie Rohren, Kesseln o.dgl. aufzutragen. Dies hat jedoch zur Folge, dass die dank der Sandzugabe erzielte Verbilligung des Gemisches durch einen arbeitsintensiven Mehraufwand wieder verlorengeht.

Das Ziel der Erfindung bestand demnach darin, ein Verfahren zur Herstellung eines Kolloidmörtels vorzuschlagen, dessen Anwendung nicht mit den vorgenannten Nachteilen behaftet ist.

Dieses Ziel wird erreicht durch das erfindungsgemässe Verfahren, das dadurch gekennzeichnet ist, dass die Umfangsgeschwindigkeit am Aussendurchmesser des Rührers min. 1500 m/Minute beträgt, dass man den Mischer mit Zement beschickt, dass man die Drehbewegung des Rührers beibehält oder auf die Hälfte der Umfangsgeschwindigkeit drosselt und dem Gemisch einen Anteil von 1–2 Teilen Sand pro Zementmenge mit einem Feuchtigkeitsgrad von 5–15% so zuführt, dass der feuchte Sand in das Zentrum des durch das Rühren gebildeten trichterförmigen Profils des Mischgutes gelangt.

Das erfindungsgemässe Verfahren wurde aufgrund zahlreicher Versuche ausgearbeitet, die zeigten, dass es unter bestimmten Bedingungen durchaus möglich ist, hochkolloidale Gemische mit einem hohen Sandanteil herzustellen, die sich im Gegensatz zu nicht oder nur zum Teil kolloidierten Gemischen ausgezeichnet für das Beschichten von Rundkörpern ohne Zuhilfenahme von Bandagen eignen.

Es wurde auch festgestellt, dass die Zugabe von Sand nach der Erfindung überraschenderweise bewirkt, dass weniger hochwertige Zemente, die sich wohl gut kolloidieren lassen, aber des öfteren Gemische ohne ausreichendes Haftvermögen ergeben, unter den erfindungsgemässen Bedingungen verwendet werden können, was unbestreitbare Vorteile sowohl in Punkto Gestehungskosten als auch hinsichtlich der Versorgung an Rohstoffen mit sich bringt.

Allerdings zeigte es sich, dass bereits geringfügige Abweichungen von den einzelnen Verfahrensschritten, wie bspw. eine zu hohe oder zu niedrige Sandfeuchtigkeit oder eine nicht verfahrensgerechte Zuführung des Sandes, zum Scheitern des Herstellungsprozesses führen.

So kann im Fall einer nicht verfahrensgerechten Zugabe des Sandanteils das Mischgut an der Wandung des Mischers hochsteigen und abbinden, während sich um die Rührerflügel ein Hohlraum bildet, in welchem diese wirkungslos rotieren.

Während die Adhäsionsfähigkeit des durch das erfindungsgemässe Verfahren gewonnenen Kolloidmörtels durchaus gleichwertig mit der des aus reinem bestem Zement hergestellten Kolloidzementes ist, zeigt das neue Produkt eine überraschend hohe Schichtkohäsion.

In der Tat genügt es je nach Bedarf 0,5–1,5% an feingehäckselten Glasfasern vorzusehen, um den aufgetragenen Kolloidmörtelschichten die notwendige Kohäsionsfähigkeit zu verleihen, ohne zu besonderen Hilfsmitteln wie insbesondere Bandagen greifen zu müssen.

Ein erfindungsgemäss hergestellter Kolloidmörtel weist je nach Sandanteil folgende mechanische Eigenschaften auf

| | |
|---|---|
| Biegezugfestigkeit nach 7 Tagen | 90–120 kp/cm$^2$ |
| Biegezugfestigkeit nach 28 Tagen | 115–140 kp/cm$^2$ |
| Druckfestigkeit nach 7 Tagen | 450–650 kp/cm$^2$ |
| Druckfestigkeit nach 28 Tagen | 615–750 kp/cm$^2$ |

Diese Versuchswerte liegen tiefer als die Werte, welche mit hochkolloidalen Zementmörteln ohne Zusätze an Sand zu erzielen sind, doch sind die erreichten Festigkeitswerte durchaus ausreichend, was die ins Auge gefassten Anwendungen anbelangt.

Mit dem erfindungsgemäss hergestellten Kolloidmörtel lassen sich Bauteile jedweder Geometrie, aus Stahl, in Schichtdicken bis 120 mm problemlos und ohne Bandagen beschichten.

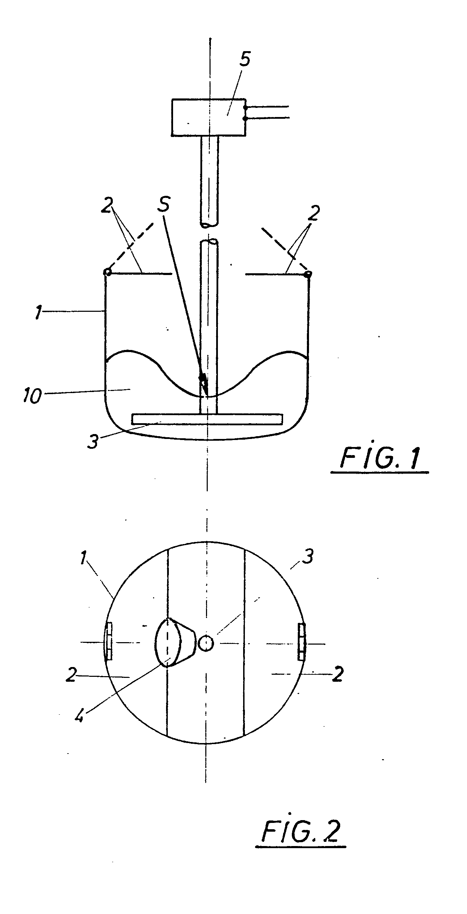

Zur Erläuterung des erfindungsgemässen Herstellungsverfahrens wird auf die Zeichnungen verwiesen. Es zeigen Fig. 1 einen Querschnitt durch einen geeigneten Mischer und Fig. 2 eine Draufsicht auf dieselbe Einrichtung.

Man erkennt den Mantel (1) des Mischers der 2 klappbare Deckel (2) aufweist. Zu der Mischvorrichtung gehört der Rührer (3) der vom Motor (5) angetrieben wird. Letzterer ist auf 2 Geschwindigkeiten einstellbar, von denen eine doppelt so hoch ist als die andere. Auch bei zugeklappten Deckeln (2) lässt sich die Zugabe des Sandes so durchführen, dass der Zuschlag in die Mitte des Profils des bewegten Mischgutes (10) gelangt, wie der Pfeil (S) dies andeutet. Hierfür kann man einen Trichter (4) von entsprechender Form vorsehen, der in den offenen Raum zwischen dem Deckel (2) und dem Schaft des Rührers (3) geneigt eingeführt wird, und durch den der Zuschlag genau an die vorgesehene Stelle ins Mischgut gelangt.

Wie in Fig. 1 angedeutet, erfährt das Mischgut beim Rühren eine Bewegung, deren Form an eine Lemniskate erinnert und deren Oberflächenprofil einen mittigen Trichter bildet. Wichtig ist, dass der Zuschlag in jenen Trichter gelangt.

## Patentansprüche

1. Verfahren zum Herstellen von Kolloidmörtel, insbesondere zum Beschichten von Formteilen aus Stahl, wie Leitungsrohren, Kesseln u.dgl., wobei man in einem Mischer (1) einen auf die Zementmenge bezogenen Anteil von 25–60% Wasser mittels eines Rührers (3) in eine Drehbewegung versetzt, dadurch gekennzeichnet, dass die Umfangsgeschwindigkeit am Aussendurchmesser des Rührers, mind. 1500 m/Minute beträgt, dass man den Mischer (1) mit Zement beschickt, dass man die Drehbewegung des Rührers (3) beibehält oder auf die Hälfte der Umfangsgeschwindigkeit drosselt und dem Gemisch einen Anteil von 1–2 Teilen Sand pro Zementmenge mit einem Feuchtigkeitsgrad von 5–15% so zuführt, dass der feuchte Sand in das Zentrum des durch das Rühren gebildeten trichterförmigen Profils des Mischgutes (10) gelangt.

2. Verfahren nach Anspruch 1, dadurch gekennzeichnet, dass man dem Kolloidmörtel einen Anteil von 0,5–1,5 Gewichtsprozent an feingehäckselten Fasern, vorzugsweise Glasfasern, zufügt.

3. Nach dem Verfahren gemäss den Ansprüchen 1 und 2 hergestellter Kolloidmörtel.

## Claims

1. Process for the manufacture of colloidal mortar, particularly for lining shaped components of steel such as conduit pipes, containers or similar, which comprises filling a mixer (1), with a proportion of water of 25 to 60% relative to the quantity of cement and imparting by means of an agitator (3) a rotary motion to said water characterised in that the peripheral velocity at the outer diameter of the agitator (3) will amount to a minimum of 1500 m/minute, that the mixer (1) is charged with cement while maintaining a rotary motion of the agitator or by reducing it to half of the peripheral velocity and that a proportion of 1–2 parts sand with a humidity of 5–15%, relative to the quantity of cement, is added to the mixture in such a manner that the wet sand will reach the center of a funnel-like profile caused by agitation of the mixture (10).

2. Process as claimed in claim 1, which comprises adding to the colloidal mortar a proportion of 0,5 to 1,5% by weight of fiber rovings, especially glas fiber rovings.

3. Colloidal mortar produced according to the process as claimed in claims 1–2.

## Revendications

1. Procédé pour la fabrication de mortier colloïdal en particulier pour le revêtement de pièces façonnées en acier tel que des tubes, des réservoirs, dans lequel on met en rotation dans un mélangeur (1) à l'aide d'un agitateur (3) une quantité d'eau de 25 à 60%, relative à la quantité de ciment, caractérisé en ce que la vitesse périférique du diamètre extérieur de l'agitateur soit au moins égale à 1500 mètres/minute, qu'on ajoute le ciment au mélangeur (1), qu'on maintienne la vitesse de rotation de l'agitateur (3) ou qu'on la réduise à la moitié et en ce qu'on ajoute au mélange une quantité d'une à deux parts de sable, par part de ciment, de façon à ce que le sable ayant une humidité de 5–15%, parvienne au centre du profil en entonnoir créé par l'agitation du mélange (10).

2. Procédé selon la revendication 1, caractérisé en ce qu'on ajoute au mortier colloïdal une part de 0,5 à 1,5% en poids de fibres finement hachées, de préférence de fibres de verre.

3. Mortier colloïdal obtenu par la mise en œuvre du procédé selon les revendications 1 et 2.

_FIG.1_

_FIG.2_